# FASCICULE DE BREVET EUROPEEN

(11) **EP 3 655 363 B1**
(45) Date de publication et mention de la délivrance du brevet: **08.09.2021**
(21) Numéro de dépôt: 18739543.9
(22) Date de dépôt: 12.07.2018
(51) Int. Cl.: C01B 39/02, C01B 39/06, C01B 39/48, B01J 29/76

(54) **SYNTHESE DIRECTE D'UN MATERIAU ALUMINOSILICATE MICROPOREUX DE STRUCTURE AFX COMPRENANT DU CUIVRE ET UTILISATION DE CE MATERIAU**
DIREKTE SYNTHESE EINES MIKROPORÖSEN ALUMINIUMSILIKATMATERIALS MIT AFX-STRUKTUR UND KUPFER SOWIE VERWENDUNG DES MATERIALS
DIRECT SYNTHESIS OF A MICROPOROUS ALUMINOSILICATE MATERIAL HAVING AN AFX STRUCTURE AND COMPRISING COPPER, AND USE OF SAID MATERIAL

(30) Priorité: 18.07.2017 FR 1756800
(43) Date de publication de la demande: 27.05.2020
(73) Titulaire: IFP Energies nouvelles, 92852 Rueil-Malmaison (FR)
(72) Inventeur: BERTHOUT, David, 69670 Vaugneray (FR); HARBUZARU, Bogdan, 69360 Simandres (FR); LLIDO, Eric, 69360 Communay (FR)
(74) Mandataire: IFP Energies nouvelles
(86) Numéro de dépôt international: PCT/EP2018/068907
(87) Numéro de publication internationale: WO 2019/016063

(56) Documents cités:
- WO-A1-2013/159828
- WO-A1-2014/090698
- DUSTIN W FICKEL AND RAUL F LOBO: "Copper coordination in Cu-SSZ-13 and Cu-SSZ-16 investigated by variable-temperature XRD", COMPENDEX, ENGINEERING INFORMATION, INC., NEW YORK, NY, US, vol. 114, no. 3, 28 janvier 2010 (2010-01-28), pages 1633-1640, XP002670366, DOI: 10.1021/JP9105025 cité dans la demande
- MARTÍN NURIA ET AL: "Cage-based small-pore catalysts for NH3-SCR prepared by combining bulky organic structure directing agents with modified zeolites as reagents", APPLIED CATALYSIS B: ENVIRONMENTAL, ELSEVIER, AMSTERDAM, NL, vol. 217, 29 mai 2017 (2017-05-29), pages 125-136, XP085112832, ISSN: 0926-3373, DOI: 10.1016/J.APCATB.2017.05.082
- LIMIN REN ET AL: "Designed copper-amine complex as an efficient template for one-pot synthesis of Cu-SSZ-13 zeolite with excellent activity for selective catalytic reduction of NOx by NH3", CHEMICAL COMMUNICATIONS, vol. 47, no. 35, 1 janvier 2011 (2011-01-01), page 9789, XP055054153, ISSN: 1359-7345, DOI: 10.1039/c1cc12469b

## Description

### DOMAINE TECHNIQUE DE L'INVENTION

L'invention a pour objet un procédé de préparation d'un matériau zéolithique aluminosilicique microporeux de type structural AFX, ainsi que l'utilisation de ce matériau, en particulier pour la réduction sélective catalytique des NOx en présence d'un réducteur en particulier sur les moteur Diesel ou à allumage commandé.

### ART ANTERIEUR

Les zéolithes échangées avec des métaux de transitions sont utilisées comme catalyseurs pour les applications de réduction catalytique sélective à l'ammoniac, désignées par l'acronyme anglo-saxon « SCR » pour « Selective Catalytic Réduction » (NH₃-SCR), dans les transports. Les zéolithes à petit pores, en particulier les chabazites échangées au cuivre, sont particulièrement adaptées. Elles existent commercialement sous la forme silico-aluminophosphate Cu-SAPO-34, aluminosilicates Cu-SSZ-13 (ou Cu-SSZ-62). Leur tenue hydrothermale et efficacité de conversion des NOx, en particulier à basse température, en font les références actuelles.

L'utilisation des zéolithes de type structural AFX pour les applications NH₃-SCR est connue, mais peu de travaux évaluent l'efficacité de catalyseurs mettant en œuvre cette zéolithe.

Fickel et al. (Fickel, D. W., & Lobo, R. F. (2009), The Journal of Physical Chemistry C, 114(3), 1633-1640) étudie l'utilisation d'une SSZ-16 (type structural AFX) échangée au cuivre pour l'élimination des NOx. Cette zéolithe est synthétisée conformément au brevet US 5,194,235, dans lequel le Cu est introduit par échange en utilisant du sulfate de cuivre(II) à 80°C pendant 1h. Des résultats récents (Fickel, D. W., D'Addio, E., Lauterbach, J. A., & Lobo, R. F. (2011), 102(3), 441-448) montrent une excellente conversion et une bonne tenue hydrothermale pour un chargement à 3,78% poids en cuivre.

Des travaux sur la synthèse de zéolithes de type structural AFX ont été effectués avec différents agents structuraux (Lobo, R. F., Zones, S. I., & Medrud, R. C. (1996), Chemistry of materials, 8(10), 2409-2411) ainsi que des travaux d'optimisation de la synthèse (Hrabanek, P., Zikanova, A., Supinkova, T., Drahokoupil, J., Fila, V., Lhotka, M., Bernauer, B. (2016), Microporous and Mesoporous Materials, 228, 107-115).

Wang et al. (Wang, D. et al., CrystEngComm., (2016), 18(6), 1000-1008) ont étudié le remplacement de l'agent structurant TMHD par un mélange TEA-TMA pour la formation de SAPO-56 et obtiennent des phases non désirées SAPO-34 et SAPO-20. L'incorporation de métaux de transition n'est pas abordée.

US2016/0137518 décrit la synthèse d'une zéolithe AFX quasi-pure échangée avec un métal de transition et son utilisation pour des applications NH₃-SCR. Aucune forme particulière de zéolithe AFX n'est évoquée.

Le document JP 2014-148441 décrit la synthèse d'une zéolithe AFX, en particulier d'une SAPO-56 comprenant du cuivre utilisable pour la réduction des NOₓ. La zéolithe AFX est synthétisée, puis ajoutée à un mélange comprenant un alcool et un sel de cuivre, le tout étant calciné. Le cuivre est donc ajouté une fois la zéolithe SAPO de type structural AFX formée. Cette zéolithe semble présenter une résistance accrue à la présence d'eau.

WO 2017/080722 présente une synthèse directe d'une zéolithe comprenant du cuivre. Cette synthèse impose de partir d'une zéolithe de type structural FAU et d'utiliser un agent complexant TEPA et un élément M(OH)ₓ pour aboutir à différents types de zéolithes, principalement de type CHA. Des zéolithes de type ANA, ABW, PHI et GME sont également produites.

La demanderesse a découvert un procédé de préparation d'un matériau aluminosilicate microporeux comprenant du cuivre de type structural AFX, présentant des performances intéressantes pour la conversion des NOₓ, notamment supérieures à celles obtenues avec des zéolithes de type structurale AFX échangées au cuivre.

Un avantage du procédé selon l'invention est d'obtenir, grâce à un ensemble de conditions opératoires spécifiques, une zéolithe aluminosilicate de type structural AFX pur, c'est-à-dire sans qu'aucune autre phase cristalline ou amorphe ne soit observée par diffraction de rayons X (DRX).

### OBJET ET INTERET DE L'INVENTION

Le procédé de synthèse directe selon l'invention permet d'obtenir un matériau aluminosilicate de type structural AFX comprenant du cuivre présentant des propriétés améliorées par rapport aux catalyseurs de l'art antérieur. En particulier, l'utilisation du catalyseur préparé selon l'invention permet d'obtenir une meilleure conversion dans la réaction de conversion des NOₓ.

### DESCRIPTION DETAILLEE DE L'INVENTION

L'invention concerne un procédé de préparation d'un matériau aluminosilicate microporeux de type structural AFX contenant du cuivre, et comprenant au moins les étapes suivantes :
a) le mélange, en milieu aqueux, d'au moins une source d'aluminium, d'au moins une source de silicium, de soude, d'au moins une source de cuivre, d'un agent complexant OCPLX organique choisi parmi le triéthylènetétramine (TETA) ou le tetraéthylènepentamine (TEPA) et d'un agent structurant 1,4-diazabicyclo[2,2,2]octane-C4-diquat dibromure (DABCO-C4) pour obtenir un gel de composition molaire :

   *a* SiO₂ : *b* Al₂O₃ : *c* Na₂O: *d* DABCO-C4: *e* CuO : *f* OCPLX: *g* H₂O

   *a*/*b* étant compris entre 100 et 40, *c*/*b* étant compris entre 25 et 50, *d*/*b* étant compris entre 3 et 10, *e*/*b* étant compris entre 0,05 et 0,1, *f*/*e* étant compris entre 1 et 1,5 et *g*/*b* étant compris entre 4000 et 1000 ;
b) le traitement hydrothermal dudit gel à une température comprise entre 130 et 180°C, sous pression de réaction autogène, pendant une durée comprise entre 1 et 8 jours sous agitation pour obtenir la cristallisation dudit matériau aluminosilicate microporeux de type structural AFX comprenant du cuivre ;
c) le traitement thermique par séchage du solide obtenu à l'issue de l'étape précédente à une température comprise entre 80 et 120°C sous flux de gaz inerte suivi d'une calcination sous air sec à une température comprise entre 400 et 600°C ;
d) l'échange ionique comprenant la mise en contact du solide obtenu à l'issue de l'étape précédente, avec une solution comprenant une espèce apte à libérer le cuivre en solution sous forme réactive sous agitation à température ambiante pendant une durée comprise entre 1 h et 2 j ;
e) le traitement thermique par séchage du solide obtenu à l'issue de l'étape précédente à une température comprise entre 80 et 120°C suivi d'une calcination sous flux de gaz inerte et ensuite de l'air à une température comprise entre 400 et 600°C ;
les étapes c) et d) pouvant avantageusement être interverties, la quantité totale de cuivre contenue dans le matériau obtenu à l'issue dudit procédé de préparation étant comprise entre 1,5 et 5,75% massique par rapport à la masse totale dudit matériau sous sa forme anhydre.

### Etape a) de mélange

Le procédé de préparation selon l'invention comprend une étape a) de mélange, en milieu aqueux, d'au moins une source d'aluminium, d'au moins une source de silicium, d'une source de soude, d'au moins une source de cuivre, d'un agent complexant organique OCPLX choisi parmi TETA (triéthylènetétramine) et TEPA (tetraéthylènepentamine) et d'un agent structurant DABCO-C4 pour obtenir un gel de formule :

*a* SiO₂ : *b* Al₂O₃ : *c* Na₂O: *d* DABCO-C4: *e* CuO : *f* OCPLX: *g* H₂O

*a*/*b* étant compris entre 40 et 100, *c*/*b* étant compris entre 20 et 50, *d*/*b* étant compris entre 3 et 10, *e*/*b* étant compris entre 0,05 et 0,1, *f*/*e* étant compris entre 1 et 1,5 et *g*/*b* étant compris entre 1000 et 4000.

De manière préférée, *a*/*b* est compris entre 40 et 90, de manière plus préférée de 50 à 70. De manière préférée *c*/*b* est compris entre 30 et 40, de manière plus préférée de 25 à 35. De manière préférée, *d*/*b* est compris entre 4 et 8, de manière plus préférée entre 5 et 7. De manière préférée, *e*/*b* est compris entre 0,05 et 0,09, de manière plus préférée entre 0,06 et 0,075. De manière préférée, f/e est compris entre 1 et 1,5. De manière préférée, *g*/*b* est compris entre 1500 et 3000, de manière plus préférée de 2000 à 2500.

La source d'aluminium peut être toute source d'aluminium connue de l'Homme du métier. En particulier, la source d'aluminium est de préférence de l'aluminate de sodium ou un sel d'aluminium, par exemple du chlorure, du nitrate, de l'hydroxyde ou du sulfate, un alkoxyde d'aluminium ou de l'alumine proprement dite, de préférence sous forme hydratée ou hydratable, comme par exemple de l'alumine colloïdale, de la pseudo-boehmite, de l'alumine gamma ou du trihydrate alpha ou beta, une zéolithe alumino-silicique comme par exemple les zéolithes Y ou les USY (Ultrastable Y, de type structural FAU). On peut également utiliser des mélanges des sources citées ci-dessus. De manière préférée, la source d'aluminium est la zéolithe Y.

La source de silicium peut être toute source de silicium connue de l'Homme du métier. En particulier, la source de silicium est de préférence de la silice en poudre, du silicate de sodium, de l'acide silicique, de la silice colloïdale, de la silice dissoute ou du tetraethoxysilane (TEOS) ou une zéolithe alumino-silicique comme par exemple les USY (Ultrastable Y, de type structural FAU). Parmi les silices en poudre, on peut utiliser les silices précipitées, notamment celles obtenues par précipitation à partir d'une solution de silicate de métal alcalin, des silices pyrogénées, par exemple du "CAB-0-SIL" et des gels de silice. On peut utiliser des silices colloïdales présentant différentes tailles de particules, par exemple de diamètre équivalent moyen compris entre 10 et 15 nm ou entre 40 et 50 nm, telles que celles commercialisées sous les marques déposées telle que "LUDOX". De manière préférée, la source de silicium est le silicate de sodium.

La source de cuivre est au moins une espèce apte à libérer le cuivre en solution sous forme réactive comme par exemple les sulfates, nitrates, chlorures, oxalates, complexes organométalliques de cuivre mais aussi des mélanges des sources citées ci-dessus. De préférence la source de cuivre est choisie parmi les sulfates et nitrates.

L'agent structurant est le 1,4-diazabicyclo[2,2,2]octane-C4-diquat dibromure (DABCO-C4). Cet agent structurant permet l'obtention d'un matériau aluminosilicate microporeux de type structural AFX. D'autres agents peuvent être utilisés pour obtenir des zéolithes SAPO de type structural AFX, mais ne permettent pas d'obtenir un matériau aluminosilicate microporeux de type structural AFX, avantageusement la SSZ-16.

L'agent complexant organique (OCPLX) utilisé dans l'étape a) du procédé selon l'invention est choisi parmi le triéthylènetétramine (TETA) ou le tetraéthylènepentamine (TEPA).

Le mélange de l'étape a) est avantageusement réalisé à température ambiante sous agitation pour permettre un bon mélange des différentes sources. Une étape de mûrissement à température ambiante est avantageusement réalisée à l'issue de l'étape a) et avant l'étape b). Cette étape de mûrissement est réalisée à température ambiante, c'est-à-dire à une température comprise entre 15 et 35°C, avantageusement entre 20 et 30°C, avantageusement sous agitation. Cette étape de mûrissement permet une cristallisation plus rapide de la zéolithe lors de l'étape b) du procédé selon l'invention.

### Etape b) de traitement hydrothermal

Le procédé de préparation selon l'invention comprend une étape b) de traitement hydrothermal dudit gel à une température comprise entre 130 et 180°C, sous pression de réaction autogène et sous agitation pendant une durée comprise entre 3 et 8 jours pour obtenir la cristallisation dudit matériau aluminosilicate de type structural AFX comprenant du cuivre.

Conformément à l'étape b) du procédé selon l'invention, le gel obtenu à l'issue de l'étape a) de mélange est soumis à un traitement hydrothermal, réalisé à une température comprise entre 130 et 180°C, de préférence entre 140 et 170°C, sous pression de réaction autogène, pendant une durée comprise entre 1 et 8 jours de préférence entre 3 et 6 jours, pour obtenir la cristallisation de ladite zéolithe aluminosilicate de type structural AFX. A la fin du traitement hydrothermale, le solide obtenu est filtré, lavé et ensuite séché pour obtenir ledit matériau aluminosilicate de type structural AFX sous forme de poudre.

Le gel est avantageusement mis sous conditions hydrothermales sous une pression de réaction autogène, en ajoutant du gaz, par exemple de l'azote.

L'étape b) du procédé de préparation selon l'invention s'effectue avec une vitesse d'agitation comprise entre 100 et 4000 tr/min, de préférence entre 200 et 2000 tr/min.

A l'issue de l'étape b), le matériau aluminosilicate de type structural AFX comprenant du cuivre, avantageusement une SSZ-16 échangée au cuivre, sans présence d'autres phases cristallines ou amorphes observables par DRX est obtenu. Son diffractogramme de rayons X correspond à la fiche ICDD (International Center for Diffraction Data) numéro : 04-013-1370.

### Etape c) de traitement thermique

Le procédé de préparation selon l'invention comprend avantageusement une étape c) de traitement thermique réalisée à l'issue de l'étape précédente, c'est-à-dire l'étape b) ou l'étape d) dans le cas préféré où les étapes c) et d) sont interverties, comprenant un traitement par séchage à une température comprise entre 80 et 120°C sous gaz inerte, avantageusement sec, avantageusement de l'azote, pendant une durée comprise entre 5 et 15 heures, préférentiellement entre 6 et 9 heures, suivi d'un traitement par calcination sous air sec, à une température comprise entre 400 et 600°C, préférentiellement entre 500 et 600°C pendant une durée comprise entre 5 et 10 heures, préférentiellement entre 6 et 9 heures, le débit d'air sec étant de manière préférée compris entre 0,5 et 1,5 l/h/g de solide à traiter, préférentiellement compris entre 0,7 et 1,2 l/g/h.

Le premier traitement sous gaz inerte permet en particulier un thermo-craquage des molécules organiques avant de libérer la porosité lors du traitement par combustion. En particulier, ledit traitement sous gaz inerte permet de maintenir l'intégrité de la structure du matériau préparé par le procédé selon l'invention lors du traitement par combustion.

Le matériau obtenu se présente sous forme de poudre de couleur bleue claire dont l'intensité dépend de la quantité de cuivre contenue et son diffractogramme de rayons X correspond à un aluminosilicate de type structural AFX, telle que définie par l'International Zeolite Association (IZA). La quantité de cuivre contenue dans ledit matériau peut varier de 0,75 à 2% massique de la masse totale du matériau sous sa forme anhydre.

### Etape d) d'échange

Le procédé de préparation selon l'invention comprend avantageusement une étape d'échange ionique comprenant la mise en contact du solide obtenu à l'issue de l'étape précédente, c'est-à-dire à l'issue de l'étape b) ou de l'étape c) dans le cas préféré où les étapes c) et d) sont interverties, avec une solution comprenant une espèce apte à libérer le cuivre en solution sous forme réactive sous agitation à température ambiante pendant une durée comprise entre 1 h et 2 j, avantageusement pendant une durée comprise entre 0,5 et 1,5 j, la concentration en ladite espèce apte à libérer le cuivre dans ladite solution étant fonction de la quantité de cuivre que l'on souhaite incorporer audit solide. A la fin de l'échange, le solide obtenu est filtré, lavé et ensuite séché pour obtenir ladite zéolithe aluminosilicate de type structural AFX sous forme de poudre. La quantité de cuivre contenue dans ledit matériau est au final comprise entre 1,5 et 5,75% massique par rapport à la masse totale du matériau sous sa forme anhydre.

Il a été découvert que l'incorporation du cuivre en deux étapes, par incorporation direct lors du mélange selon l'étape a) et par échange lors de l'étape d), permet d'obtenir des matériaux présentant de meilleures propriétés que des matériaux comprenant la même teneur en cuivre, ledit cuivre ayant été incorporé par incorporation directe ou par échange.

De manière avantageuse, la quantité de cuivre introduite lors de l'étape a) représente entre 0,75 et 2%, la quantité de cuivre introduite lors de l'étape d) représentant entre 0,75 et 5%, la quantité de cuivre totale contenue dans ledit matériau étant au final, c'est-à-dire à l'issue du procédé de préparation selon l'invention, comprise entre 1,5 et 5,75%, tous les pourcentages étant des pourcentages massique par rapport à la masse totale du matériau sous sa forme anhydre obtenu à l'issue du procédé de préparation selon l'invention. De manière avantageuse, entre 25 et 45% du cuivre total est introduit lors de l'étape a) et de manière préférée entre 30 et 40% du cuivre total est introduit lors de l'étape a).

### Etape e) de traitement thermique

Le procédé de préparation selon l'invention comprend avantageusement une étape e) de traitement thermique réalisée à l'issue de l'étape précédente comprenant un traitement sous gaz inerte sec, avantageusement de l'azote, à une température comprise entre 400 et 600°C, préférentiellement entre 500 et 600°C pendant une durée comprise entre 5 et 15 heures, préférentiellement entre 6 et 9 heures, suivi d'un traitement par combustion sous air sec, à une température comprise entre 400 et 600°C, préférentiellement entre 500 et 600°C pendant une durée comprise entre 5 et 10 heures, préférentiellement entre 6 et 9 heures, le débit d'air sec étant de manière préférée compris entre 0,5 et 1,5 l/h/g de solide à traiter, préférentiellement compris entre 0,7 et 1,2 l/g/h.

La demanderesse a découvert que le matériau obtenu par le procédé selon l'invention présente des caractéristiques différentes des matériaux aluminosilicate de type structural AFX comprenant du cuivre connus jusqu'à présent. En particulier, le matériau obtenu par le procédé selon l'invention présente des propriétés améliorées pour la conversion des NOₓ. L'invention concerne donc également un matériaux aluminosilicate microporeux de type structural AFX comprenant du cuivre obtenu, ou susceptible d'être obtenu, par un procédé de préparation tel que décrit dans la présente demande.

Le matériau préparé selon l'invention n'est pas un matériau silica-aluminophosphate (SAPO) et ne pourrait être obtenu par des procédés de préparation de SAPO.

### Caractérisation du catalyseur préparé selon l'invention

Le matériau préparé selon l'invention a une structure AFX selon la classification de l'International Zeolite Association (IZA). Cette structure est caractérisée par diffraction aux rayons X (DRX).

Le diagramme de diffraction aux rayons X (DRX) est obtenu par analyse radiocristallographique au moyen d'un diffractomètre en utilisant la méthode classique des poudres avec le rayonnement Kα₁ du cuivre (λ = 1,5406À). A partir de la position des pics de diffraction représentée par l'angle 2θ, on calcule, par la relation de Bragg, les équidistances réticulaires dₕₖₗ caractéristiques de l'échantillon. L'erreur de mesure Δ(dₕₖₗ) sur dₕₖₗ est calculée grâce à la relation de Bragg en fonction de l'erreur absolue Δ(2θ) affectée à la mesure de 2θ. Une erreur absolue Δ(2θ) égale à ± 0,02° est communément admise. L'intensité relative Iᵣₑₗ affectée à chaque valeur de dₕₖₗ est mesurée d'après la hauteur du pic de diffraction correspondant. La comparaison du diffractogramme avec les fiches de la base de données d'ICDD (International Centre for Diffraction Data) en utilisant un logiciel comme par exemple le DIFFRACT.SUITE nous permet aussi de faire l'identification des phases cristallines présentes dans le matériau obtenu.

L'analyse qualitative et quantitative des espèces chimiques présentes dans les matériaux obtenus est faite par spectrométrie de fluorescence des rayons X (FX). Celle-ci est une technique d'analyse chimique utilisant une propriété physique de la matière, la fluorescence de rayons X. Le spectre des rayons X émis par la matière est caractéristique de la composition de l'échantillon, en analysant ce spectre, on peut en déduire la composition élémentaire, c'est-à-dire les concentrations massiques en éléments.

La perte au feu d'un échantillon, désignée sous l'acronyme PAF, est calculée par la différence de masse de l'échantillon avant et après calcination à 550°C pendant 2 h. Elle est exprimée en % correspondant au pourcentage de perte de masse.

### Utilisation du catalyseur préparé selon l'invention

L'invention concerne également l'utilisation du matériau préparé par le procédé selon l'invention, avantageusement mis en forme par dépôt sous forme de revêtement (« washcoat » selon la terminologie anglo-saxonne) sur une structure nid d'abeilles, filtrante ou non, pour la réduction sélective de NOₓ par un réducteur tel que NH₃ ou H₂. Ladite structure nid d'abeilles ainsi revêtue constitue un pain catalytique. Ladite structure peut être composée de cordiérite, carbure de silicium (SiC), titanate d'aluminium (AlTi) ou tout autre matériau dont la porosité est comprise entre 30 et 70%. La quantité de matériau préparé par le procédé selon l'invention déposé sur ladite structure est comprise entre 40 à 140 g/l pour les structures filtrantes et entre 120 et 200 g/l pour les structures avec canaux ouverts.

Le revêtement proprement dit (« washcoat ») comprend le matériau aluminosilicate de type structural AFX comprenant du cuivre préparé selon l'invention, avantageusement associé à un liant tel que la cerine, l'oxyde de zirconium, l'alumine, la silice-alumine non zéolithique, l'oxyde de titane, un oxyde mixte de type cerine-zircone, un oxyde de tungstène. Ledit revêtement est avantageusement une solution ou une suspension. Il est appliqué à ladite structure de toute manière connue de l'Homme du métier.

Ladite structure peut être revêtue d'une ou plusieurs couches. Le revêtement comprenant le matériau aluminosilicate de type structural AFX comprenant du cuivre préparé selon l'invention est avantageusement associé à, c'est-à-dire recouvre un ou est recouvert par, un autre revêtement présentant des capacités de réduction des NOx ou favorisant l'oxydation de polluants, en particulier celle de l'ammoniac.

Ladite structure revêtue par le matériau préparé par le procédé selon l'invention est avantageusement intégrée dans une ligne d'échappement d'un moteur à combustion interne fonctionnant principalement en mélange pauvre, c'est-à-dire en excès d'air par rapport à la stœchiométrie de la réaction de combustion comme c'est le cas pour les moteurs Diesel par exemple. Dans ces conditions de fonctionnement du moteur, les gaz d'échappement contiennent les polluants suivants : des suies, des hydrocarbures imbrulés (HC), du monoxyde de carbone (CO), des oxydes d'azotes (NOx). En amont de ladite structure peut être placé un catalyseur d'oxydation dont la fonction est d'oxyder les HC et le CO ainsi qu'un filtre pour éliminer les suies des gaz d'échappement, la fonction de ladite structure étant d'éliminer le NOx, sa gamme de fonctionnement de se situant entre 100 et 900°C et de manière préférée entre 200°C et 500°C.

### Descriptions des figures

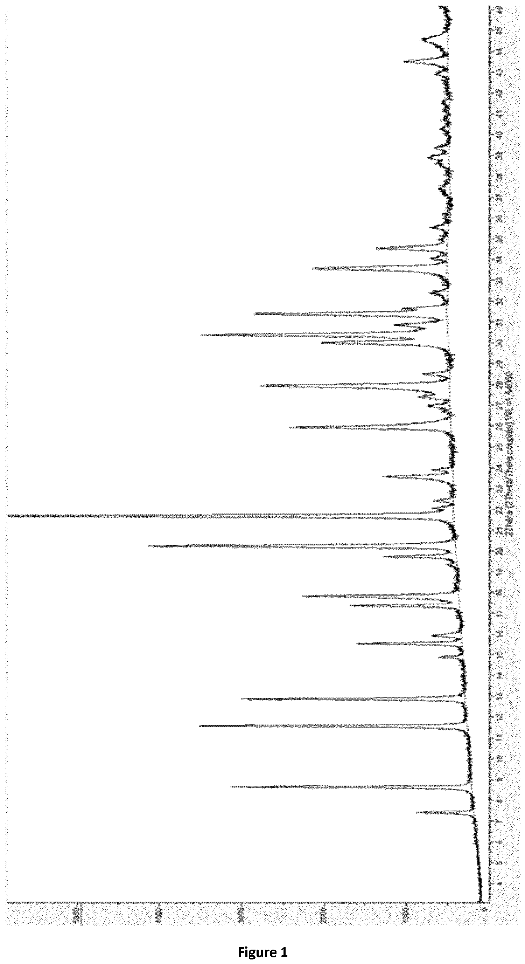

La figure 1 présente un diffractogramme de rayons X du matériau Cu-aluminosilicate préparé dans l'exemple 4.

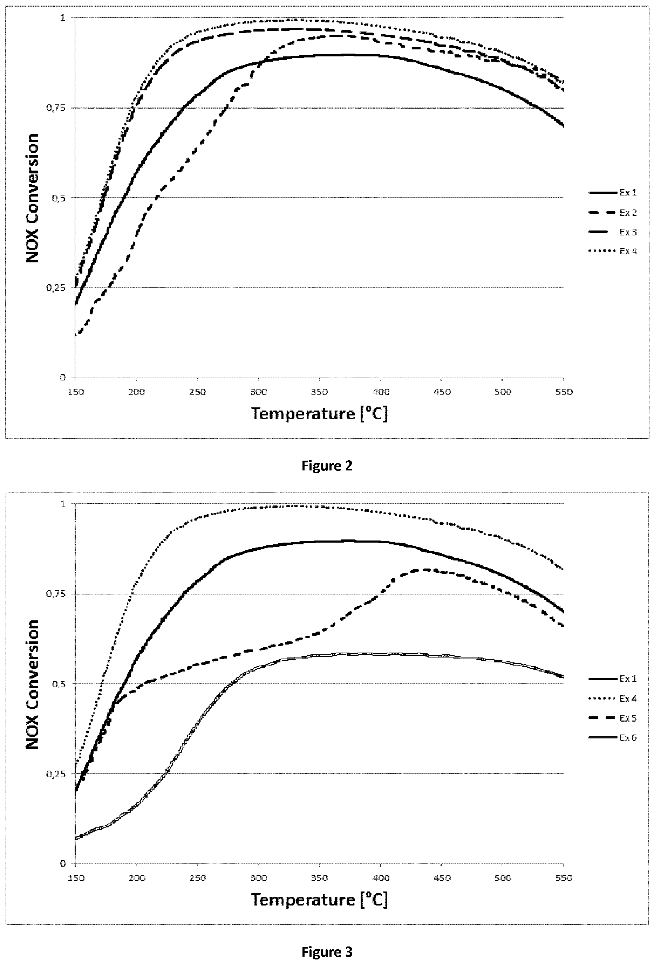

La figure 2 présente les résultats de conversion des NOx, les courbes Ex 1, Ex 2, Ex 3 et Ex 4 correspondant respectivement aux tests réalisés avec les matériaux préparés selon l'exemple 1, l'exemple 2, l'exemple 3 et l'exemple 4. A l'abscisse 400°C, les courbes correspondent, respectivement, de bas en haut à Ex 1, Ex 2, Ex 3 et Ex 4.
La figure 3 présente les résultats de conversion des NOx, les courbes Ex 1, Ex 4, Ex 5 et Ex 6 correspondant respectivement aux tests réalisés avec les matériaux préparés selon l'exemple 1, l'exemple 4, l'exemple 5 et l'exemple 6. A l'abscisse 400°C, les courbes correspondent, respectivement, de bas en haut à Ex 6, Ex 5, Ex 1 et Ex 4.

### EXEMPLES

### Exemple 1 (non-conforme)

*Dans cet exemple, une zéolithe SSZ-16 échangée au Cu est synthétisée selon l'art antérieur. Dans cet exemple, le cuivre est introduit par échange ionique.*

### Etape de mélange

17,32 g d'hydroxyde de sodium sont dissous dans 582,30 g d'eau permutée, sous agitation (300 tr/min) et à température ambiante. On rajoute dans cette solution 197,10 g de silicate de sodium et on homogénéise l'ensemble sous agitation (300 tr/min à température ambiante. On rajoute ensuite 9,95 g de zéolithe NaY CBV100 sous agitation (300 tr/min) et on poursuit ainsi jusqu'à dissolution de la zéolithe. On dissout dans la solution obtenue, 43,67 g du structurant DABCO-C4 et on homogénéise ainsi sous agitation (450 tr/min) pendant 30 minutes, à température ambiante.

Le mélange réactionnel présente la composition molaire suivante : 100 SiO₂ : 1,67 Al₂O₃ : 50 Na₂O: 10 DABCO-C4: 4000 H₂O

### Etape de mûrissement

Le mélange réactionnel obtenue à l'étape de mélange est maintenu à température ambiante sous agitation pendant 24 heures.

### Etape de traitement hydrothermal

Le gel obtenu est laissé en autoclave à une température de 150°C pendant 6 jours sous agitation (200 tr/min). Les cristaux obtenus sont séparés et lavés avec de l'eau permutée jusqu'à obtention d'un pH des eaux de lavage inférieur à 8. Le matériau lavé est séché.

Une analyse DRX montre que le produit obtenu est une zéolithe SSZ-16 de type structural AFX brute de synthèse et pure (fiche ICDD, PDF 04-03-1370).

### Etape de traitement thermique

La zéolithe SSZ-16 brute de synthèse est traitée sous flux de N₂ sec à 550°C pendant 8 h, puis calcinée sous flux d'air sec à 550°C durant 8 h. La perte au feu (PAF) est de 18% poids.

### Echange ionique au NH₄⁺ sur la SSZ-16 calciné

La zéolithe SSZ-16 calcinée est mise en contact d'une solution de NH₄NO₃ 3 molaire pendant 5 heures sous agitation à température ambiante. Le rapport entre le volume de solution de NH₄NO₃ et la masse de solide est de 10. Le solide obtenu est filtre et lavé et la procédure d'échange est répété encore une fois dans les mêmes conditions. Le solide final est séparé, lavé et séché. Une analyse DRX montre que le produit obtenu est une zéolithe SSZ-16 sous forme ammoniacale (NH4-SSZ-16) de type structural AFX brute de synthèse et pure (fiche ICDD, PDF 04-03-1370).

### Etape de traitement thermique

La zéolithe SSZ-16 sous forme ammoniacale (NH4-SSZ-16) est traitée sous flux d'air sec à 550°C pendant 8 heures avec une rampe de montée en température de 1°C/min. La perte au feu (PAF) est de 4% poids. Le produit obtenus est une zéolithe SSZ-16 sous forme protonée (H-SSZ-16).

### Echange ionique au Cu sur la H-SSZ-16

La zéolithe H-SSZ-16 est mise en contact d'une solution de [Cu(NH₃)₄](NO₃)₂ pendant 1 journée sous agitation à température ambiante. Le solide final est séparé, lavé et séché. Une analyse DRX montre que le produit obtenu est une zéolithe SSZ-16 de type structural AFX pure (fiche ICDD, PDF 04-03-1370).

L'analyse chimique par fluorescence des rayons X (FX) donné un rapport molaire Si/AI de 6,5 et un pourcentage massique de Cu de 3%.

### Exemple 2 (non-conforme)

*Synthèse d'une zéolithe SSZ-16 avec incorporation directe du Cu en utilisant un agent complexant Tetraéthylènepentamine (TEPA).*

### Etape de mélange

2,64 g d'hydroxyde de sodium sont dissous dans 77,92 g d'eau permutée, sous agitation (300 tr/min) et à température ambiante. On rajoute dans cette solution 30,06 g de silicate de sodium et on homogénéise l'ensemble sous agitation à 300 tr/min à température ambiante. On verse ensuite 1,52 g de zéolithe NaY CBV100 dans la solution antérieurement obtenue sous agitation à 300 tr/min et on poursuit ainsi jusqu'à la dissolution de la zéolithe. Cette solution est appelée solution 2-1.

0,14 g de sulfate de cuivre sont dissous dans 10,94 g d'eau permutée sous agitation pendant 10 minutes puis on dissout dans cette solution de cuivre 0,11 g de tetraéthylènepentamine (TEPA). Ensuite cette solution est versée dans la solution 2-1 sous agitation à 300 tr/min. On homogénéise l'ensemble durant 10 min sous agitation (300 tr/min) et ensuite on rajoute 6,67 g du structurant DABCO-C4 et on homogénéise ainsi sous agitation à 300 tr/min pendant 10 minutes, à température ambiante.

Le mélange réactionnel présente la composition molaire suivante : 100 SiO₂ : 1,67 Al₂O₃ : 50 Na₂O: 10 DABCO-C4 : 0,38 CuO : 0,38 TEPA : 4000 H₂O

### Etape de mûrissement

Le mélange réactionnel obtenue à l'étape de mélange est maintenu à température ambiante sous agitation pendant 24 heures.

### Etape de traitement hydrothermal

Le gel obtenu est laissé en autoclave à une température de 150°C pendant 6 jours sous agitation à 200 tr/min. Les cristaux obtenus sont séparés et lavés avec de l'eau permutée jusqu'à obtention d'un pH des eaux de lavage inférieur à 8. Le matériau lavé est séché.

### Etape de traitement thermique (calcination)

La zéolithe SSZ-16 brute de synthèse est traitée sous flux de N₂ sec à 550°C pendant 8 h, puis calcinée sous flux d'air sec à 550°C durant 8 h.

Les analyses DRX de la zéolithe calcinée montre que le produit obtenu est une zéolithe aluminosilicate SSZ-16 (fiche ICDD, PDF 04-03-1370). L'analyse chimique par fluorescence des rayons X (FX) donné un rapport molaire Si/AI de 6,5 et un pourcentage massique de Cu de 3%.

### Exemple 3 (conforme)

*Dans cet exemple, on synthétise une zéolithe SSZ-16 avec incorporation du cuivre en deux étapes, première étape dans la synthèse de la zéolithe en utilisant un complexe Cu-Tetraéthylènepentamine (TEPA) suivi d'un deuxième étape après la calcination de la zéolithe par échange ionique avec le complexe [Cu(NH₃)₄](NO₃)₂.*

### Etape de mélange

2,64 g d'hydroxyde de sodium sont dissous dans 77,92 g d'eau permutée, sous agitation (300 tr/min) et à température ambiante. On rajoute dans cette solution 30,06 g de silicate de sodium et on homogénéise l'ensemble sous agitation à 300 tr/min à température ambiante. On verse ensuite 1,52 g de zéolithe NaY CBV100 dans la solution antérieurement obtenue sous agitation à 300 tr/min et on poursuit ainsi jusqu'à la dissolution de la zéolithe. Cette solution est appelée solution 2-1.

0,05 g de sulfate de cuivre sont dissous dans 10,94 g d'eau permutée sous agitation pendant 10 min puis on dissout dans cette solution de cuivre 0,05 g de tetraéthylènepentamine (TEPA). Ensuite cette solution est versée dans la solution 2-1 sous agitation à 300 tr/min. On homogénéise l'ensemble durant 10 min sous agitation (300 tr/min) et ensuite on rajoute 6,67 g du structurant DABCO-C4 et on homogénéise ainsi sous agitation à 300 tr/min pendant 10 minutes, à température ambiante.

Le mélange réactionnel présente la composition molaire suivante : 100 SiO₂ : 1,67 Al₂O₃ : 50 Na₂O: 10 DABCO-C4 : 0,13 CuO : 0,13 TEPA : 4000 H₂O

### Etape de mûrissement

Le mélange réactionnel obtenue à l'étape de mélange est maintenu à température ambiante sous agitation pendant 24 heures.

### Etape de traitement hydrothermal

Le gel obtenu est laissé en autoclave à une température de 150°C pendant 6 jours sous agitation à 200 tr/min. Les cristaux obtenus sont séparés et lavés avec de l'eau permutée jusqu'à obtention d'un pH des eaux de lavage inférieur à 8. Le matériau lavé est séché.

### Etape de traitement thermique (calcination)

La zéolithe Cu-SSZ-16 brute de synthèse est traitée sous flux de N₂ sec à 550°C pendant 8 h, puis calcinée sous flux d'air sec à 550°C durant 8 h.

Les analyses DRX montre que le produit obtenu est une zéolithe aluminosilicate SSZ-16 (fiche ICDD, PDF 04-03-1370). L'analyse chimique par fluorescence des rayons X (FX) donné un rapport molaire Si/AI de 6,5 et un pourcentage massique de Cu de 1%.

### Echange ionique au Cu sur la Cu-SSZ-16

La zéolithe Cu-SSZ-16 calcinée est mise en contact avec une solution de [Cu(NH₃)₄](NO₃)₂ pendant 1 journée sous agitation à température ambiante. Le solide final est séparé, lavé et séché.

### Etape de traitement thermique (calcination)

La zéolithe Cu-SSZ-16 obtenue après la mise en contact avec la solution de [Cu(NH₃)₄](NO₃)₂ est traitée sous flux de N₂ sec à 550°C pendant 8 h, puis calcinée sous flux d'air sec à 550°C durant 8 h.

Une analyse DRX montre que le produit obtenu est une zéolithe SSZ-16 de type structural AFX pure (fiche ICDD, PDF 04-03-1370).

L'analyse chimique par fluorescence des rayons X (FX) donné un rapport molaire Si/AI de 6,5 et un pourcentage massique de Cu de 3%.

### Exemple 4 (conforme)

*Dans cet exemple, on synthétise une zéolithe SSZ-16 avec incorporation du cuivre en deux étapes, première étape dans la synthèse de la zéolithe en utilisant un complexe Cu-Triéthylènetétramine (TETA) suivi d'un deuxième étape après la calcination de la zéolithe par échange ionique avec le complexe [Cu(NH₃)₄](NO₃)₂.*

### Etape de mélange

17,37 g d'hydroxyde de sodium sont dissous dans 507 g d'eau permutée, sous agitation (300 tr/min) et à température ambiante. On rajoute dans cette solution 198 g de silicate de sodium et on homogénéise l'ensemble sous agitation à 300 tr/min à température ambiante. On verse ensuite 9,95 g de zéolithe NaY CBV100 dans la solution antérieurement obtenue sous agitation à 300 tr/min et on poursuit ainsi jusqu'à la dissolution de la zéolithe. Cette solution est appelée solution 4-1.

0,32 g de sulfate de cuivre sont dissous dans 73 g d'eau permutée sous agitation pendant 10 minutes puis on dissout dans cette solution de cuivre 0,19 g de triéthylènetétramine (TETA). Ensuite cette solution est versée dans la solution 4-1 sous agitation à 300 tr/min. On homogénéise l'ensemble durant 10 min sous agitation (300 tr /min) et ensuite on rajoute 43,7 g du structurant DABCO-C4 et on homogénéise ainsi sous agitation à 300 tr/min pendant 10 minutes, à température ambiante.

Le mélange réactionnel présente la composition molaire suivante : 100 SiO₂ : 1,67 Al₂O₃ : 50 Na₂O: 10 DABCO-C4 : 0,13 CuO : 0,13 TETA : 4000 H₂O

### Etape de mûrissement

Le mélange réactionnel obtenue à l'étape de mélange est maintenu à température ambiante sous agitation pendant 24 heures.

### Etape de traitement hydrothermal

Le gel obtenu est introduit dans un autoclave et chauffé à une température de 150°C pendant 6 jours sous agitation à 200 tr/min. Les cristaux obtenus sont séparés et lavés avec de l'eau permutée jusqu'à l'obtention d'un pH des eaux de lavage inférieur à 8. Le matériau lavé est séché.

### Etape de traitement thermique (calcination)

La zéolithe Cu-SSZ-16 brute de synthèse obtenue est traitée sous flux de N₂ sec à 550°C pendant 8 heures, puis calcinée sous flux d'air sec à 550°C durant 8 heures.

Les analyses DRX montre que le produit obtenu est une zéolithe aluminosilicate SSZ-16 (fiche ICDD, PDF 04-03-1370). L'analyse chimique par fluorescence des rayons X (FX) donné un rapport molaire Si/AI de 6,5 et un pourcentage massique de Cu de 1%.

### Echange ionique au Cu sur la Cu-SSZ-16

La zéolithe Cu-SSZ-16 calcinée est mise en contact avec une solution de [Cu(NH₃)₄](NO₃)₂ pendant 1 journée sous agitation à température ambiante. Le solide final est séparé, lavé et séché.

### Etape de traitement thermique (calcination)

La zéolithe Cu-SSZ-16 obtenue après la mise en contact avec la solution de [Cu(NH₃)₄](NO₃)₂ est traitée sous flux de N₂ sec à 550°C pendant 8 h, puis calcinée sous flux d'air sec à 550°C durant 8 h.

Une analyse DRX montre que le produit obtenu est une zéolithe SSZ-16 de type structural AFX pure (fiche ICDD, PDF 04-03-1370).

L'analyse chimique par fluorescence des rayons X (FX) donné un rapport molaire Si/AI de 6,5 et un pourcentage massique de Cu de 3%.

### Exemple 5 (non-conforme)

*Dans cet exemple, on synthétise une zéolithe SSZ-16 avec incorporation du cuivre en deux étapes, première étape dans la synthèse de la zéolithe en utilisant un complexe Cu-Triéthylènetétramine (TETA) suivi d'un deuxième étape après la calcination de la zéolithe par échange ionique avec le complexe [Cu(NH₃)₄](NO₃)₂. Le pourcentage final de Cu dans la zéolithe calcinée est supérieur à 6%.*

### Etape de mélange

17,37 g d'hydroxyde de sodium sont dissous dans 507 g d'eau permutée, sous agitation (300 tr/min) et à température ambiante. On rajoute dans cette solution 198 g de silicate de sodium et on homogénéise l'ensemble sous agitation à 300 tr/min à température ambiante. On verse ensuite 9,95 g de zéolithe NaY CBV100 dans la solution antérieurement obtenue sous agitation à 300 tr/min et on poursuit ainsi jusqu'à la dissolution de la zéolithe. Cette solution est appelée solution 4-1.

0,32 g de sulfate de cuivre sont dissous dans 73 g d'eau permutée sous agitation pendant 10 minutes puis on dissout dans cette solution de cuivre 0,19 g de triéthylènetétramine (TETA). Ensuite cette solution est versée dans la solution 4-1 sous agitation à 300 tr/min. On homogénéise l'ensemble durant 10 min sous agitation (300 tr /min) et ensuite on rajoute 43,7 g du structurant DABCO-C4 et on homogénéise ainsi sous agitation à 300 tr/min pendant 10 minutes, à température ambiante.

Le mélange réactionnel présente la composition molaire suivante : 100 SiO₂ : 1,67 Al₂O₃ : 50 Na₂O: 10 DABCO-C4 : 0,13 CuO : 0,13 TETA : 4000 H₂O

### Etape de mûrissement

Le mélange réactionnel obtenue à l'étape de mélange est maintenu à température ambiante sous agitation pendant 24 heures.

### Etape de traitement hydrothermal

Le gel obtenu est introduit dans un autoclave et chauffé à une température de 150°C pendant 6 jours sous agitation à 200 tr/min. Les cristaux obtenus sont séparés et lavés avec de l'eau permutée jusqu'à l'obtention d'un pH des eaux de lavage inférieur à 8. Le matériau lavé est séché.

### Etape de traitement thermique (calcination)

La zéolithe Cu-SSZ-16 brute de synthèse obtenue est traitée sous flux de N₂ sec à 550°C pendant 8 heures, puis calcinée sous flux d'air sec à 550°C durant 8 heures.

Les analyses DRX montre que le produit obtenu est une zéolithe aluminosilicate SSZ-16 (fiche ICDD, PDF 04-03-1370). L'analyse chimique par fluorescence des rayons X (FX) donné un rapport molaire Si/AI de 6,5 et un pourcentage massique de Cu de 1%.

### Echange ionique au Cu sur la Cu-SSZ-16

La zéolithe Cu-SSZ-16 calcinée est mise en contact avec une solution de [Cu(NH₃)₄](NO₃)₂ pendant 1 journée sous agitation à température ambiante. Le solide obtenue est séparé et lavé et l'opération d'échange est répétée encore une fois.

### Etape de traitement thermique (calcination)

La zéolithe Cu-SSZ-16 obtenue après la mise en contact avec la solution de [Cu(NH₃)₄](NO₃)₂ est traitée sous flux de N₂ sec à 550°C pendant 8 h, puis calcinée sous flux d'air sec à 550°C durant 8 h.

Une analyse DRX montre que le produit obtenu est une zéolithe SSZ-16 de type structural AFX pure (fiche ICDD, PDF 04-03-1370).

L'analyse chimique par fluorescence des rayons X (FX) donné un rapport molaire Si/AI de 6,5 et un pourcentage massique de Cu de 6,5%.

### Exemple 6 (non-conforme)

*Dans cet exemple, on synthétise une zéolithe SSZ-16 avec incorporation du cuivre en deux étapes, première étape dans la synthèse de la zéolithe en utilisant un complexe Cu-Triéthylènetétramine (TETA) suivi d'un deuxième étape après la calcination de la zéolithe par échange ionique avec le complexe [Cu(NH₃)₄](NO₃)₂. Le pourcentage final de Cu dans la zéolithe calcinée est inférieur à 1,5%.*

### Etape de mélange

17,37 g d'hydroxyde de sodium sont dissous dans 507 g d'eau permutée, sous agitation (300 tr/min) et à température ambiante. On rajoute dans cette solution 198 g de silicate de sodium et on homogénéise l'ensemble sous agitation à 300 tr/min à température ambiante. On verse ensuite 9,95 g de zéolithe NaY CBV100 dans la solution antérieurement obtenue sous agitation à 300 tr/min et on poursuit ainsi jusqu'à la dissolution de la zéolithe. Cette solution est appelée solution 4-1.

0,16 g de sulfate de cuivre sont dissous dans 73 g d'eau permutée sous agitation pendant 10 minutes puis on dissout dans cette solution de cuivre 0,10 g de triéthylènetétramine (TETA). Ensuite cette solution est versée dans la solution 4-1 sous agitation à 300 tr/min. On homogénéise l'ensemble durant 10 min sous agitation (300 tr /min) et ensuite on rajoute 43,7 g du structurant DABCO-C4 et on homogénéise ainsi sous agitation à 300 tr/min pendant 10 minutes, à température ambiante.

Le mélange réactionnel présente la composition molaire suivante : 100 SiO₂ : 1,67 Al₂O₃ : 50 Na₂O: 10 DABCO-C4 : 0,06 CuO : 0,06 TETA : 4000 H₂O

### Etape de mûrissement

Le mélange réactionnel obtenue à l'étape de mélange est maintenu à température ambiante sous agitation pendant 24 heures.

### Etape de traitement hydrothermal

Le gel obtenu est introduit dans un autoclave et chauffé à une température de 150°C pendant 6 jours sous agitation à 200 tr/min. Les cristaux obtenus sont séparés et lavés avec de l'eau permutée jusqu'à l'obtention d'un pH des eaux de lavage inférieur à 8. Le matériau lavé est séché.

### Etape de traitement thermique (calcination)

La zéolithe Cu-SSZ-16 brute de synthèse obtenue est traitée sous flux de N₂ sec à 550°C pendant 8 heures, puis calcinée sous flux d'air sec à 550°C durant 8 heures.

Les analyses DRX montre que le produit obtenu est une zéolithe aluminosilicate SSZ-16 (fiche ICDD, PDF 04-03-1370). L'analyse chimique par fluorescence des rayons X (FX) donné un rapport molaire Si/AI de 6,5 et un pourcentage massique de Cu de 0,5%.

### Echange ionique au Cu sur la Cu-SSZ-16

La zéolithe Cu-SSZ-16 calcinée est mise en contact avec une solution de [Cu(NH₃)₄](NO₃)₂ pendant 2 heures sous agitation à température ambiante. Le solide obtenu est séparé, lavé et séché.

### Etape de traitement thermique (calcination)

La zéolithe Cu-SSZ-16 obtenue après la mise en contact avec la solution de [Cu(NH₃)₄](NO₃)₂ est traitée sous flux de N₂ sec à 550°C pendant 8 h, puis calcinée sous flux d'air sec à 550°C durant 8 h.

Une analyse DRX montre que le produit obtenu est une zéolithe SSZ-16 de type structural AFX pure (fiche ICDD, PDF 04-03-1370).

L'analyse chimique par fluorescence des rayons X (FX) donné un rapport molaire Si/AI de 6,5 et un pourcentage massique de Cu de 1,2%.

### Exemple 7

Afin d'évaluer l'activité en conversion des NOₓ des différents matériaux préparés, on réalise un test catalytique de réduction des oxydes d'azote (NOₓ) par l'ammoniac (NH₃) en présence d'oxygène (O₂) à différentes températures de fonctionnement. Les matériaux non-conforme préparé selon les exemples 1 et 2 sont comparé aux matériaux conformes préparés selon les exemples 3 et 4.

Pour chaque test, 200 mg de matériau sous forme de poudre est disposé dans un réacteur en quartz. 145 l/h d'une charge représentative d'un mélange de gaz d'échappement d'un moteur Diesel sont alimentés dans le réacteur.

Cette charge présente la composition molaire suivante :

| | |
|---|---|
| O₂ | 8,5% |
| CO₂ | 9% |
| NO | 400 ppm |
| NH₃ | 400 ppm |
| H₂O | 10% |
| N₂ | qpc |

Les résultats de conversion sont présentés sur les figures 2 et 3, les courbes Ex 1, Ex 2, Ex 3, Ex 4, Ex 5 et Ex 6 correspondant respectivement aux tests réalisés avec les matériaux préparés selon l'exemple 1, l'exemple 2, l'exemple 3, l'exemple 4, l'exemple 5 et l'exemple 6.

On observe que les matériaux préparés selon l'invention présentent une meilleure conversion des NOₓ que les matériaux préparés selon l'exemple 1, l'exemple 2, l'exemple 5 ou l'exemple 6, et ce pour toutes les températures testées.

## Revendications

1. Procédé de préparation d'un matériau aluminosilicate microporeux de type structural AFX contenant du cuivre, et comprenant au moins les étapes suivantes :
a) le mélange, en milieu aqueux, d'au moins une source d'aluminium, d'au moins une source de silicium, de soude, d'au moins une source de cuivre, d'un agent complexant organique OCPLX choisi parmi le triéthylènetétramine (TETA) ou le tetraéthylènepentamine (TEPA) et d'un agent structurant 1,4-diazabicyclo[2,2,2]octane-C4-diquat dibromure (DABCO-C4) pour obtenir un gel de composition molaire :
*a* SiO₂ : *b* Al₂O₃ : *c* Na₂O: *d* DABCO-C4: *e* CuO : *f* OCPLX: *g* H₂O
*a*/*b* étant compris entre 100 et 40, *c*/*b* étant compris entre 25 et 50, *d*/*b* étant compris entre 3 et 10, *e*/*b* étant compris entre 0,05 et 0,1, *f*/*e* étant compris entre 1 et 1,5 et *g*/*b* étant compris entre 4000 et 1000 ;
b) le traitement hydrothermal dudit gel à une température comprise entre 130 et 180°C, sous pression de réaction autogène, pendant une durée comprise entre 1 et 8 jours sous agitation pour obtenir la cristallisation dudit matériau aluminosilicate microporeux de type structural AFX comprenant du cuivre ;
c) le traitement thermique par séchage du solide obtenu à l'issue de l'étape précédente à une température comprise entre 80 et 120°C sous flux de gaz inerte suivi d'une calcination sous air sec à une température comprise entre 400 et 600°C ;
d) l'échange ionique comprenant la mise en contact du solide obtenu à l'issue de l'étape précédente, avec une solution comprenant une espèce apte à libérer le cuivre en solution sous forme réactive sous agitation à température ambiante pendant une durée comprise entre 1 h et 2 j ;
e) le traitement thermique par séchage du solide obtenu à l'issue de l'étape précédente à une température comprise entre 80 et 120°C suivi d'une calcination sous flux de gaz inerte et ensuite de l'air à une température comprise entre 400 et 600°C ;
la quantité totale de cuivre contenue dans le matériau obtenu à l'issue dudit procédé de préparation étant comprise entre 1,5 et 5,75% massique par rapport à la masse totale dudit matériau sous sa forme anhydre.

2. Procédé selon la revendication 1 dans lequel les étapes c) et d) sont interverties.

3. Procédé selon l'une des revendications précédentes dans lequel la quantité de cuivre introduite lors de l'étape a) représente entre 0,75 et 2%, la quantité de cuivre introduite lors de l'étape d) représentant entre 0,75 et 5%, la quantité de cuivre contenue dans ledit matériau étant au final comprise entre 1,5 et 5,75%, tous les pourcentages étant des pourcentages massique par rapport à la masse totale du matériau sous sa forme anhydre obtenu à l'issue dudit procédé de préparation.

4. Procédé selon l'une des revendications précédentes dans lequel une étape de mûrissement à température ambiante est réalisée à l'issue de l'étape a) et avant l'étape b).

5. Procédé selon la revendication précédente dans lequel ladite étape b) est réalisée à une température comprise entre 140 et 170°C.

6. Procédé selon l'une des revendications précédentes dans laquelle ladite étape b) est réalisée pendant une durée comprise entre 3 et 6 jours.

7. Procédé selon l'une des revendications précédentes dans lequel ladite étape b) s'effectue sous agitation avec une rotation de l'arbre d'agitation comprise entre 100 et 4000 rotations par minute.

8. Procédé selon l'une des revendications précédentes dans lequel ladite étape b) s'effectue sous agitation avec une rotation de l'arbre d'agitation comprise entre 200 et 2000 rotations par minute.

9. Procédé selon l'une des revendications précédentes dans lequel le débit d'air sec dudit traitement par calcination lors de ladite étape c) est compris entre 0,5 et 1,5 l/h/g de solide à traiter.

10. Matériau aluminosilicate microporeux de type structural AFX comprenant du cuivre obtenu par un procédé selon l'une des revendications 1 à 9.

11. Utilisation du matériau aluminosilicate microporeux de type structural AFX comprenant du cuivre selon la revendication 10 ou préparé selon l'une des revendications 1 à 9 pour la réduction sélective de NOₓ par un réducteur tel que NH₃ ou H₂.

12. Utilisation selon la revendication précédente dans laquelle ledit matériau est mis en forme par dépôt sous forme de revêtement sur une structure nid d'abeilles.

13. Utilisation selon la revendication précédente dans laquelle ledit revêtement comprend ledit matériau associé à un liant tel que la cerine, l'oxyde de zirconium, l'alumine, la silice-alumine non zéolithique, l'oxyde de titane, un oxyde mixte de type cerine-zircone, un oxyde de tungstène.

14. Utilisation selon l'une des revendications 12 à 13 dans laquelle ledit revêtement est associé à un autre revêtement présentant des capacités de réduction des NOₓ ou favorisant l'oxydation de polluants.

15. Utilisation selon la revendication 12 dans laquelle ladite structure revêtue par ledit matériau est intégrée dans une ligne d'échappement d'un moteur à combustion interne.

## Patentansprüche

1. Verfahren zur Herstellung eines kupferhaltigen mikroporösen Aluminiumsilikat-Materials vom AFX-Strukturtyp, das mindestens die folgenden Schritte umfasst:
a) Mischen von mindestens einer Aluminiumquelle, mindestens einer Siliciumquelle, Natriumhydroxid, mindestens einer Kupferquelle, einem organischen Komplexbildner OCPLX, der aus Triethylentetramin (TETA) oder Tetraethylenpentamin (TEPA) ausgewählt ist, und dem Strukturbildner 1,4-Diazabicyclo[2.2.2]octan-C4-diquatdibromid (DABCO-C4) in wässrigem Medium zum Erhalt eines Gels mit der folgenden molaren Zusammensetzung:
*a* SiO₂ : *b* Al₂O₃ : *c* Na₂O : *d* DABCO-C4 : *e* CuO : *f* OCPLX : *g* H₂O
wobei *a*/*b* zwischen 100 und 40 liegt, *c*/*b* zwischen 25 und 50 liegt, *d*/*b* zwischen 3 und 10 liegt, *e*/*b* zwischen 0,05 und 0,1 liegt, *f*/*e* zwischen 1 und 1,5 liegt und *g*/*b* zwischen 4000 und 1000 liegt;
b) hydrothermale Behandlung des Gels bei einer Temperatur zwischen 130 und 180 °C unter autogenem Reaktionsdruck über einen Zeitraum zwischen 1 und 8 Tagen unter Rühren zum Erhalt der Kristallisation des kupferhaltigen mikroporösen Aluminiumsilikat-Materials vom AFX-Strukturtyp;
c) Wärmebehandlung durch Trocknung des am Ende des vorhergehenden Schritts erhaltenen Feststoffs einer Temperatur zwischen 80 und 120 °C unter einem Strom von Inertgas mit anschließender Calcinierung unter trockener Luft bei einer Temperatur zwischen 400 und 600 °C;
d) Ionenaustausch, umfassend das Inkontaktbringen des am Ende des vorhergehenden Schritts erhaltenen Feststoffs mit einer Lösung, die eine Spezies umfasst, die Kupfer in Lösung in reaktiver Form freisetzen kann, unter Rühren bei Umgebungstemperatur über einen Zeitraum zwischen 1 h und 2 d;
e) Wärmebehandlung durch Trocknung des am Ende des vorhergehenden Schritts erhaltenen Feststoffs einer Temperatur zwischen 80 und 120 °C mit anschließender Calcinierung unter einem Strom von Inertgas und dann Luft bei einer Temperatur zwischen 400 und 600 °C;
wobei die in dem am Ende des Herstellungsschritt erhaltenen Material enthaltene Gesamtmenge von Kupfer zwischen 1,5 und 5,75 Massen-%, bezogen auf die Gesamtmasse des Materials in seiner wasserfreien Form, liegt.

2. Verfahren nach Anspruch 1, bei dem die Schritte c) und d) vertauscht werden.

3. Verfahren nach einem der vorhergehenden Ansprüche, bei dem die in Schritt a) eingetragene Kupfermenge zwischen 0,75 und 2 % ausmacht, wobei die in Schritt d) eingetragene Kupfermenge zwischen 0,75 und 5 % ausmacht und wobei die letztendlich in dem Material enthaltene Kupfermenge zwischen 1,5 und 5,75 % liegt, wobei es sich bei allen Prozentangaben um Massenprozentangaben, bezogen auf die Gesamtmasse des am Ende des Herstellungsverfahrens erhaltenen Materials in seiner wasserfreien Form, handelt.

4. Verfahren nach einem der vorhergehenden Ansprüche, bei dem am Ende von Schritt a) und vor Schritt b) ein Reifungsschritt bei Umgebungstemperatur durchgeführt wird.

5. Verfahren nach einem der vorhergehenden Ansprüche, bei dem der Schritt b) einer Temperatur zwischen 140 und 170 °C durchgeführt wird.

6. Verfahren nach einem der vorhergehenden Ansprüche, bei dem der Schritt b) über einen Zeitraum zwischen 3 und 6 Tagen durchgeführt wird.

7. Verfahren nach einem der vorhergehenden Ansprüche, bei dem der Schritt b) unter Rühren mit einer Rührwellendrehzahl zwischen 100 und 4000 Umdrehungen/min durchgeführt wird.

8. Verfahren nach einem der vorhergehenden Ansprüche, bei dem der Schritt b) unter Rühren mit einer Rührwellendrehzahl zwischen 200 und 2000 Umdrehungen/min durchgeführt wird.

9. Verfahren nach einem der vorhergehenden Ansprüche, bei dem die Durchflussrate von trockener Luft bei der Calcinierungsbehandlung in Schritt c) zwischen 0,5 und 1,5 l/h/g zu behandelndem Feststoff liegt.

10. Kupferhaltiges mikroporöses Aluminiumsilikat-Material vom AFX-Strukturtyp, erhalten durch ein Verfahren nach einem der Ansprüche 1 bis 9.

11. Verwendung des kupferhaltigen mikroporösen Aluminiumsilikat-Materials vom AFX-Strukturtyp nach Anspruch 10 oder des nach einem der Ansprüche 1 bis 9 hergestellten kupferhaltigen mikroporösen Aluminiumsilikat-Materials vom AFX-Strukturtyp zur selektiven Reduktion von NOₓ mit einem Reduktionsmittel wie NH₃ oder H₂.

12. Verwendung nach dem vorhergehenden Anspruch, wobei das Material durch Abscheidung in Form einer Beschichtung auf einer Wabenstruktur geformt wird.

13. Verwendung nach dem vorhergehenden Anspruch, wobei die Beschichtung das Material in Kombination mit einem Bindemittel wie Ceroxid, Zirconiumdioxid, Aluminiumoxid, nichtzeolithischem Siliciumdioxid-Aluminiumoxid, Titandioxid einem Ceroxid-Zirconiumdioxid-Mischoxid oder einem Wolframoxid umfasst.

14. Verwendung nach einem der Ansprüche 12 bis 13, wobei die Beschichtung mit einer anderen Beschichtung, die NOₓ-Reduktionsvermögen aufweist oder die Oxidation von Schadstoffen fördert, kombiniert ist.

15. Verwendung nach Anspruch 12, wobei die mit dem Katalysator beschichtete Struktur in eine Abgasleitung eines Motors mit innerer Verbrennung integriert ist.

## Claims

1. Process for preparing a copper-containing microporous aluminosilicate material with AFX structure, comprising at least the following steps:
a) mixing, in an aqueous medium, of at least one aluminum source, at least one silicon source, sodium hydroxide, at least one copper source, an organic complexing agent OCPLX chosen from triethylenetetramine (TETA) or tetraethylenepentamine (TEPA) and a structuring agent 1,4-diazabicyclo[2.2.2]octane-C4-diquat dibromide (DABCO-C4), in order to obtain a gel of molar composition:
*a* SiO₂ : *b* Al₂O₃ : *c* Na₂O : *d* DABCO-C4 : *e* CuO : *f* OCPLX : *g* H₂O
a/b being between 100 and 40, *c*/*b* being between 25 and 50, *d*/*b* being between 3 and 10, *e*/*b* being between 0.05 and 0.1, *f*/*e* being between 1 and 1.5 and *g*/*b* being between 4000 and 1000;
b) hydrothermal treatment of said gel at a temperature of between 130 and 180°C, under an autogenous reaction pressure, for a period of between 1 and 8 days with stirring in order to obtain the crystallization of said copper-comprising microporous aluminosilicate material with AFX structure;
c) drying heat treatment of the solid obtained at the end of the preceding step at a temperature of between 80 and 120°C under a stream of inert gas followed by calcining under dry air at a temperature of between 400 and 600°C;
d) ion exchange comprising bringing the solid obtained at the end of the preceding step into contact with a solution comprising a species capable of releasing copper in solution in reactive form with stirring at ambient temperature for a period of between 1 h and 2 d;
e) drying heat treatment of the solid obtained at the end of the preceding step at a temperature of between 80 and 120°C followed by calcining under a stream of inert gas and then air at a temperature of between 400 and 600°C;
the total amount of copper contained in the material obtained at the end of said preparation process being between 1.5 and 5.75% by weight relative to the total weight of said material in its anhydrous form.

2. Process according to Claim 1, wherein steps c) and d) are inverted.

3. Process according to one of the preceding claims, wherein the amount of copper introduced during step a) represents between 0.75 and 2%, the amount of copper introduced during step d) representing between 0.75 and 5%, the amount of copper contained in said material being ultimately between 1.5 and 5.75%, all the percentages being percentages by weight relative to the total weight of the material in its anhydrous form obtained at the end of said preparation process.

4. Process according to one of the preceding claims, wherein a maturation step at ambient temperature is carried out at the end of step a) and before step b).

5. Process according to the preceding claim, wherein said step b) is carried out at a temperature of between 140 and 170°C.

6. Process according to one of the preceding claims, wherein said step b) is carried out for a period of between 3 and 6 days.

7. Process according to one of the preceding claims, wherein said step b) is carried out with stirring with a rotation of the stirring shaft of between 100 and 4000 rotations per minute.

8. Process according to one of the preceding claims, wherein said step b) is carried out with stirring with a rotation of the stirring shaft of between 200 and 2000 rotations per minute.

9. Process according to one of the preceding claims, wherein the dry air flow rate of said calcination treatment in the course of said step c) is between 0.5 and 1.5 1/h/g of solid to be treated.

10. Copper-comprising microporous aluminosilicate material with AFX structure obtained by a process according to one of Claims 1 to 9.

11. Use of the copper-comprising microporous aluminosilicate material with AFX structure according to Claim 10 or prepared according to one of Claims 1 to 9, for the selective reduction of NOₓ by a reducing agent such as NH₃ or H₂.

12. Use according to the preceding claim, wherein said material is formed by deposition in the form of a coating on a honeycomb structure.

13. Use according to the preceding claim, wherein said coating comprises said material in combination with a binder such as cerine, zirconium oxide, alumina, non-zeolite silica-alumina, titanium oxide, a cerine-zirconia mixed oxide, or a tungsten oxide.

14. Use according to one of Claims 12 or 13, wherein said coating is in combination with another coating having NOₓ reducing capacities or capacities which promote the oxidation of pollutants.

15. Use according to Claim 12, wherein said structure coated by said material is integrated in an exhaust line of an internal combustion engine.
